# EUROPÄISCHE PATENTANMELDUNG

(11) **EP 3 403 715 A1**
(43) Veröffentlichungstag der Anmeldung: **21.11.2018**
(21) Anmeldenummer: 17171765.5
(22) Anmeldetag: 18.05.2017
(51) Int. Cl.: B01D 69/02, B01D 69/12, B01D 71/28

(54) **FILTER ZUR TRENNUNG VON HYDROPHILEN UND HYDROPHOBEN FLUIDEN SOWIE VERFAHREN ZU DESSEN HERSTELLUNG**

(71) Anmelder: Universität Innsbruck, 6020 Innsbruck (AT)
(72) Erfinder: NAIER, Benjamin, 6020 Innsbruck (AT); SCHOTTENBERGER, Herwig, 6082 Patsch (AT); BAKRY, Rania, 6020 Innsbruck (AT); PARTL, Gabriel, 6521 Fließ (AT)
(74) Vertreter: Frick, Robert

(57) **Zusammenfassung**

Die Erfindung betrifft einen Filter zur Trennung hydrophiler von hydrophoben Fluiden, wobei der Filter ein oleophobes Polymer umfasst, daraus besteht oder damit beschichtet ist, und wobei der Filter hydrophile und oleophobe Eigenschaften zeigt, wobei wenigstens ein Teil der repetitiven Einheiten des oleophoben Polymers auf ein fluorhaltiges Monomer zurückgeht, bei dem es sich um ein ionisches organisches Molekül handelt, das eine ionische Gruppe, eine vernetzbare Gruppe und eine fluorhaltige Gruppe aufweist. Die Erfindung betrifft ferner Verfahren zur Herstellung eines solchen Filters sowie ein Verfahren zur Trennung hydrophiler und hydrophober Fluide unter Verwendung eines solchen Filters.

## Beschreibung

Die Erfindung betrifft einen Filter zur Trennung von hydrophilen und hydrophoben Fluiden, wobei der Filter ein oleophobes Polymer umfasst, daraus besteht oder damit beschichtet ist, und wobei der Filter hydrophile und oleophobe Eigenschaften zeigt. Die Erfindung betrifft ferner ein Verfahren zur Herstellung eines derartigen Filters.

Derzeit werden hydrophile und hydrophobe Fluide wie beispielsweise Wasser und Öl großtechnisch zumeist mit Hilfe von Wasserabscheidern voneinander getrennt. Derartige Apparate sind in der Regel groß, teuer und wenig mobil.

Aus dem Stand der Technik sind ferner Filtermembranen mit hydrophilen und oleophoben Beschichtungen bekannt, mit denen ebenfalls eine Trennung von Wasser und Öl stattfinden kann. Allerdings sind mit den technischen Lösungen oft Probleme verbunden.

Die US 3,567,500 beschreibt die Verwendung hydrophiler und oleophober Materialien auf Basis von Fluoramid-Amino-Polymeren. Nach dem Kenntnisstand der Erfinder der vorliegenden Patentanmeldung konnten sich diese Lösungsansätze aber vermutlich aufgrund hoher Herstellungskosten nicht durchsetzen.

Die US 2015/136712 A1 offenbart eine Zusammensetzung umfassend ein hydrophiles und oleophobes Co-Polymer aus einem ungeladenen Fluor(meth)acrylat und einem nicht fluorhaltigen Betain als Co-Monomere. Ferner werden Membranen beschrieben, die eine Beschichtung aus einem derartigen Polymer aufweisen, um Wasser und Öl voneinander trennen zu können. Die linearen Fluorketten können direkt mit einer Membranlösung vermischt oder aufgetragen werden und kommen somit als Nachrüstung bestehender Filter in Frage. Allerdings sind die langkettigen Fluoracrylate in ihrer Löslichkeit begrenzt und die Umsetzung erfordert die Verwendung oft kostenintensiver und giftiger Fluorlösungsmittel. Auch die Synthese dieser Polymere erfordert die Verwendung umweltschädlicher Tenside. Ein weiterer Nachteil besteht darin, dass bei der Verwendung von Fluoracrylaten die Trennleistung sehr stark von der Kettenläge der Perfluoroalkylgruppen abhängt. Aufgrund gesetzlicher Regelungen dürfen nunmehr in Europa und den USA nur noch Perfluoralkylkettenlängen von maximal C₆F₁₃ verwendet werden, wobei bei diesen Fluorseitenkettenlängen eine Ölabweisung mit diesen bekannten Polymeren und Co-Polymeren nur in verringertem Maße möglich ist.

Die US 9,186,631 B2 offenbart eine hydrophile Membran mit einem Kontaktwinkel für Wasser unter 5° und einem Kontaktwinkel für Öl von über 90°C. Diese Membran besteht aus einem Polyethylendiacrylat, 1*H,*1*H*,2*H*,2*H*-heptadecafluorodecyl-polyhedral-oligomerem Silsesquioxan (F-POSS) und 2-Hydroxy-2-methylpropiophenon. Die Membran ist aufgrund des Quervernetzers mechanisch stabil und die technischen Kennzahlen sind zufriedenstellend. Allerdings wird abermals eine Perfluoralkylkettenlänge von C₈F₁₇ verwendet und die Anwendungsmöglichkeiten sind daher aufgrund der genannten gesetzlichen Regularien beschränkt. Zudem repräsentieren polyhedrale oligomere Siloxane eine sehr kostspielige Substanzklasse. Ein weiterer Nachteil besteht darin, dass die Membran keine ionischen Strukturanteile, also auch keine Ladung enthält und damit anfällig für mikrobielles Wachstum ist.

Die US 2014/0048478 A1 beschreibt eine Beschichtung für eine Membran, die hydrophile Ethylenglykolsegmente und oleophobe Vinylidenfluoridsegmente enthält und durch Kombination dieser Segmente einen Kontaktwinkel für Wasser von 0 bis 60° und einen Kontaktwinkel für Öl von 40° bis 100° aufweist. Nachteilig an dieser Technologie ist, dass die unterschiedlichen Membransegmente oft nicht miteinander bzw. nur begrenzt miteinander mischbar sind. Zusätzlich können keine geladenen Monomere bzw. Polymere verwendet werden. Dies führt dazu, dass die Membranen für eine etwaige Verkeimung anfällig sind. Auch kann eine quervernetzte Struktur mit diesen Membranen nur in sehr aufwändiger Weise erzielt werden.

Die WO 2015/075446 A2 offenbart die Verwendung eines Dip-Coating Verfahrens für Filter, in dem abwechselnd geladene nicht fluorhaltige Polymere und fluorhaltige Tenside aufgetragen werden. Als nachteilig ist hier zu beobachten, dass die Fluortenside nur aufgrund von elektrostatischen Wechselwirkungen aneinander haften. Daher ist die Beschichtung leicht abwaschbar und ist nur für eine kurze Zeit haltbar. Auch besteht die Gefahr, dass Fluortenside an die Umwelt abgegeben werden.

Die US 2005/0287111 A1 offenbart die Verwendung von kationischen Fluortensiden in polymeren Systemen und zeigen deren Anwendungen in verschiedensten Bereichen. Für die Bereitstellung hydrophiler und oleophober Membranen mit geladenen Fluortensiden wurde allerdings bisher angenommen, dass eine bewegliche Fluorgruppe existieren muss. In diesem Zusammenhang ist z.B. auf "Recent advances in oil-repellent surfaces", International Materials Reviews, 61:2, 101-126, 2016, "Surface and solid-state properties of a fluorinated polyelectrolyte-surfactant complex", Langmuir, 1999, 15, 4867-4874, sowie "Nanostructured materials with low surface energies formed by polyelectrolytes and fluorinated amphiphiles (PEFA)", Polym. Int., 2000, 49, 636-644) zu verweisen.

Ziel der Erfindung ist es, einen hydrophilen und oleophoben Filter bereitzustellen, der einfach und kostengünstig herzustellen ist und hervorragende Eigenschaften in der Trennung hydrophile von hydrophoben Fluiden zeigt.

Vor diesem Hintergrund betrifft die Erfindung Filter mit hydrophilen und gleichzeitig oleophoben Eigenschaften, die ein oleophobes Polymer umfassen, daraus bestehen oder damit beschichtet sind. Erfindungsgemäß geht wenigstens ein Teil der repetitiven Einheiten des oleophoben Polymers auf ein fluorhaltiges Monomer zurück, bei dem es sich um ein ionisches organisches Molekül handelt, das also eine ionische Gruppe, sowie eine vernetzbare Gruppe und eine fluorhaltige Gruppe in einer kovalenten Anbindung aufweist. Aufgrund der simultanen hydrophilen und oleophoben Eigenschaften kann der erfindungsgemäße Filter beispielsweise in der Trennung wässriger und öliger Phasen einer Emulsion Anwendung finden. Dabei kann die wässrige Phase den Filter passieren, während die ölige Phase zurückgehalten wird. Ferner kann der erfindungsgemäße Filter auch in der Separation von Gasen bzw. in der Separation von Gasen und Flüssigkeiten mit unterschiedlichen Polaritäten Anwendung finden.

Bei dem Filter kann es sich um einen fluiddurchlässigen und vorzugsweise schichtförmigen Körper, z.B. eine Filtermembran, oder um eine fluiddurchlässige und vorzugsweise gekapselte Schüttung handeln. Der Filter kann ein Substrat wie beispielsweise eine Membran umfassen, das wenigstens teilweise mit einer Beschichtung umfassend oder bestehend aus dem oleophoben Polymer überzogen ist. Beispiele geeigneter Substrate umfassen textile Stoffe wie Vliese oder Gewebe aus organischen oder anorganischen Fasern (z.B. Seide, Baumwolle, Lyocell, Polyamid oder dergleichen), Papier, Metallnetze (z.B. aus Edelstahl oder Bronze), Kunststoffmembranen oder poröse Metall- oder Keramikkörper wie beispielsweise Glasfritten. Organische Fasern umfassen beispielsweise Polyolefinfasern. Poröse Metall- oder Keramikkörper umfassen beispielsweise Sinterkörper.

Beispiele geeigneter beschichtbarer Materialien für Kunststoffmembranen umfassen Polyurethane, PVDF (Polyvinylidendifluorid), PTFE (Polytetrafluorethylen), expandiertes PTFE, PSF (Polysulfon), Polyethersulfon, PAN (Polyacrylaonitril), Polypropylen, Polyethylen, Polyamid, Polystyrol, Polyethylen, Metallnetze, cellulosebasierende Materialien und Kombinationen daraus.

Erfindungsgemäß umfasst der Filter das oleophobe, teilfluorierte und ionenhaltige Polymer, ist vollständig aus diesem gefertigt oder zumindest abschnittsweise mit diesem beschichtet. Beispielsweise können ein körniges Material einer Schüttung, die Fasern eines Vlieses, gestickte Fasern oder eine Kunststoffmembran aus dem beschriebenen Polymer gefertigt sein. Ferner können körnige Materialien einer Schüttung oder jeder der oben genannten Filterkörper zumindest abschnittsweise mit dem beschriebenen oleophoben, teilfluorierten und ionenhaltigen Polymer beschichtet sein.

Sofern es sich bei dem Filter um einen porösen Körper wie beispielsweise eine poröse Membran handelt, kann die durchschnittliche Porengröße zum Erreichen eines optimalen Trenneffekts zwischen wässriger und öliger Phase beispielsweise zwischen 0,001 und 1000 µm und vorzugsweise zwischen 0,01 und 500 µm umfassen.

In einer Ausführungsform handelt es sich bei der fluorhaltigen Gruppe um eine perfluorierte Kohlenwasserstoffgruppe. Als perfluorierte Kohlenwasserstoffgruppe ist eine Kohlenwasserstoffgruppe zu verstehen, in der alle Wasserstoffatome durch Fluoratome ersetzt sind. In einer Ausführungsform handelt es sich bei der fluorhaltigen funktionellen Gruppe um eine Gruppe vom Typ -(CF₂)ₙ-F, wobei n zwischen 1 und 20 liegt und vorzugsweise 5, 6 oder 7 ist. Die Kettenlänge von 5 bis 7 ist besonders vorteilhaft, da die oleophoben Eigenschaften bei dieser Kettenlänge bereits sehr stark ausgeprägt sind, gleichzeitig aber noch eine gute Umweltverträglichkeit gegeben ist. Besonders bevorzugt ist der Einsatz einer Perfluorhexylgruppe mit der Strukturformel -(CF₂)₆-F. Alternativ sind auch Fluorether als Fluor-haltige Gruppen denkbar. Diese sind bevorzugt vom Typ (CF₂)ₙ-O-(CF₂)ₘ, wobei n und m unabhängig voneinander zwischen 1 und 6 liegen können. Alternativ sind auch fluorierte Benzolderivate denkbar, wobei 2 bis 5 Fluoratome oder Trifluormethylgruppen am Aromaten gebunden sein können.

In einer Ausführungsform umfasst die vernetzbare Gruppe eine reaktive Doppelbindung. Bevorzugt ist dabei eine C=C Doppelbindung wie insbesondere eine substituierte oder unsubstituierte Vinylgruppe. Ferner eignen sich in einer Ausführungsform auch Allylgruppen, (Meth)acrylatgruppen oder (Meth)acrylamidgruppen.

In einer Ausführungsform umfasst die vernetzbare Gruppe ein Isocyanat, ein Anhydrid, ein Amin, eine Säuregruppe, ein Azid, ein Diazoniumsalz bzw. eine Hydroxylgruppe.

Die vernetzbare Gruppe ist im oleophoben Polymer des erfindungsgemäßen Filters abreagiert und bildet einen Teil der kovalenten Verbindung zwischen benachbarten repetitiven Einheiten. Eine unsubstituierte Vinylgruppe des fluorhaltigen Monomers hat im Polymer beispielsweise die inkorporierte Teilstruktur einer zweibindugen Ethylengruppe.

In einer Ausführungsform handelt es sich bei der ionischen Gruppe um eine ionische heterozyklische und insbesondere heteroaromatische Gruppe.

In einer Ausführungsform ist die Ladung über mehrere Atome der ionischen Gruppe delokalisiert.

In einer Ausführungsform sind die ionische Gruppe oder das fluorhaltige Monomer insgesamt positiv geladen. Beispielsweise kann vorgesehen sein, dass die ionische Gruppe oder das fluorhaltige Monomer insgesamt einfach positiv geladen sind.

In einer Ausführungsform handelt es sich bei der ionischen Gruppe um eine ionische heterozyklische und insbesondere heteroaromatische Gruppe mit wenigstens einem ringbildenden Stickstoffatom, das durch zusätzliche Substitution eine positive Ladung annimmt. Beispiele umfassen N,N-disubstituierte Imidazoliumgruppe, N-N-disubstituierte Benzimidazoliumgruppe, um eine N-substituierte Vinylpyridiniumgruppe oder eine quaternäre Ammoniumverbindung. Besonders bevorzugt sind N-alkylierte Gruppen wie beispielsweise N,N-dialkylierte Imidazoliumgruppen.

Bei dem Substituenten am Stickstoffatom kann es sich beispielsweise um die vernetzbare oder fluorierte Gruppe handeln, die unmittelbar oder mittelbar, d.h., anhand eines dazwischen liegenden vorzugsweise aliphatischen Spacers an das Stickstoffatom gebunden ist.

In einer Ausführungsform ist die ionische Gruppe zwischen der vernetzbaren und der fluorhaltigen Gruppe angeordnet. Vorzugsweise ist die Struktur des fluorhaltigen Monomers dergestalt, dass die vernetzbare und die fluorhaltige Gruppe radial ausgehend von der ionischen Gruppe und vorzugsweise dem ionischen Heterocyclus angeordnet sind.

In einer Ausführungsform ist zwischen der ionischen und der fluorhaltigen Gruppe und/oder zwischen der ionischen und der vernetzbaren Gruppe ein Spacer angeordnet. Die fluorhaltige oder vernetzbare Gruppe ist in dieser Ausführungsform also kovalent anhand eines dazwischenliegenden Spacers an die ionische Gruppe gebunden. Geeignete Spacer umfassen ungeladene und unfluorierte Organylgruppen. Bevorzugte Beispiele umfassen vorzugsweise lineare Alkylengruppen mit 1 bis 10 und vorzugsweise 1 bis 5 weiter vorzugsweise mit 1, 2 oder 3 Kohlenstoffatomen. Besonders bevorzugt ist Ethylen.

In einer Ausführungsform umfasst der Spacer eine Etherbrücke (-O-) oder Thioetherbrücke (-S-). Beispielsweise kann die fluorhaltige Gruppe über eine Etherbrücke an den Spacer gebunden sein. Der Spacer kann beispielsweise über eine Thioetherbrücke an die ionische Gruppe gebunden sein.

In einer Ausführungsform weist das fluorhaltige Monomer zwischen 8 und 50 und vorzugsweise zwischen 10 und 30 schwere Atome auf. Unter einem schweren Atom werden vorliegend alle Atome außer Wasserstoff verstanden.

In einer Ausführungsform liegt die molare Masse des fluorhaltigen Monomers zwischen 100 und 3500 g/mol, vorzugsweise zwischen 130 und 1000 g/mol.

In einer Ausführungsform handelt es sich bei dem fluorhaltigen Monomer um eine ionische Flüssigkeit.

In einer Ausführungsform umfasst das fluorhaltige Monomer genau eine ionische, fluorhaltige und vernetzbare Gruppe.

In einer Ausführungsform kann das fluorhaltige Monomer auch mehrere ionische Gruppen und/oder mehrere fluorhaltige Gruppen und/oder vernetzbare Gruppen aufweisen. Vorzugsweise umfasst das fluorhaltige Monomer dabei wenigstens zwei identische oder unterschiedliche Zentren, die jeweils eine geladene und vorzugsweise auch eine fluorhaltige Gruppe umfassen. Die Zentren können anhand eines Linkers miteinander verbunden sein, der vorzugsweise die ionischen Gruppen der beiden Zentren verbindet. Bei den Linkern kann es sich um solche Gruppen handeln, wie sie oben bereits als Spacer beschrieben worden sind.

In einer Ausführungsform weist das funktionalisierte Monomer eine Organosulfanylgruppe auf, welche vorzugsweise zusätzlich substituiert ist und eine anionische Gruppe darstellt.

Geeignete fluorhaltige kationische Monomere umfassen beispielsweise die nachfolgend gezeigten Verbindungen:

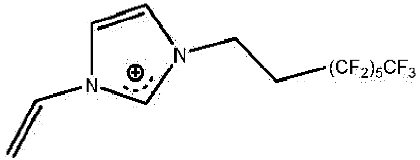

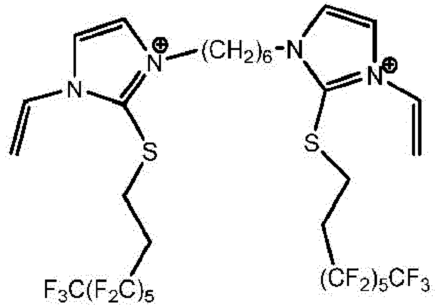

Weitere geeignete fluorhaltige Monomere umfassen die folgenden Moleküle:

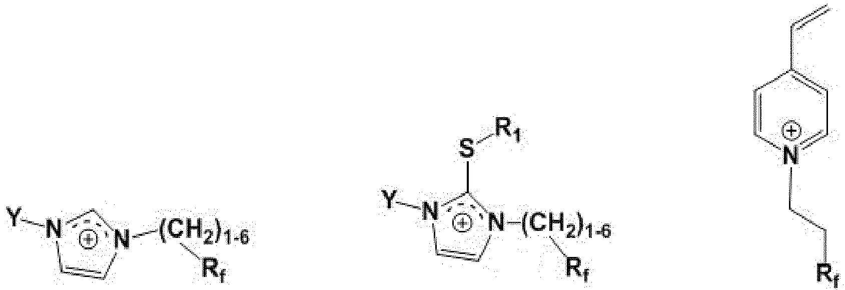

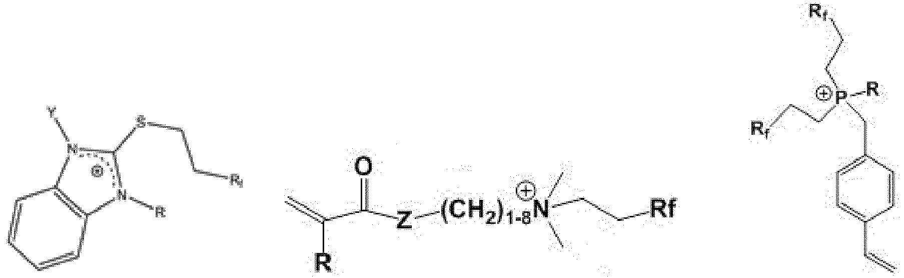

Wiederum weitere geeignete fluorhaltige anionische Monomere umfassen die folgenden Moleküle:

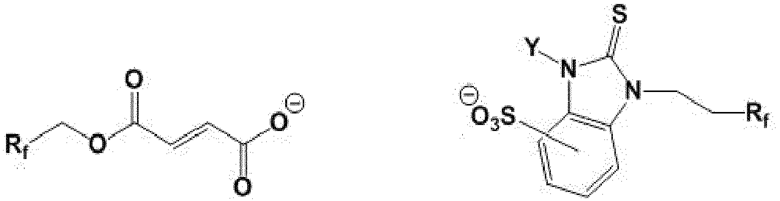

In den oben wiedergegebenen Formeln bezeichnet Y eine vernetzbare Gruppe gemäß obiger Definition, R_{f} eine fluorhaltige Gruppe gemäß obiger Definition und R einen Wasserstoff oder ein C1-6 Alkan.

Eine Herstellung dieser Monomere kann beispielsweise wie in Partl et at., "3-(1H,1H,2H,2H-Perfluorooctyl)-1-vinyl-4-imidazoline-2-thione", IUCrData (2017) 2, x170648 beschrieben, erfolgen.

In einer Ausführungsform handelt es sich bei dem oleophoben Polymer um ein Co-Polymer und wenigstens ein weiterer Teil der repetitiven Einheiten geht auf ein hydrophiles Co-Monomer zurück. Das hydrophile Co-Monomer weist eine polymerisierbare Gruppe und eine ionische oder ungeladene hydrophile Gruppe auf. Diese Co-Monomere können die Hydrophilie des Co-Polymers erhöhen. Geladene derartige Co-Monomere können auch die Anti-Fouling Eigenschaften verbessern.

Das zusätzliche Co-Monomer weist vorzugsweise keine fluorhaltigen Gruppen auf. Dies ist aus ökologischen Gesichtspunkten zu bevorzugen und erleichtert in der gegebenen Ausführungsform die Abstimmung zwischen hydrophilen und oleophoben Eigenschaften der Beschichtung.

Beispiele hydrophiler Co-Monomere umfassen geladene oder ungeladene (Meth)Acrylat- oder (Meth)Acrylamidmonomere bzw. (Meth)Acrylamidmonomerderivate. Geeignete Beispiele ungeladener hydrophile Monomere umfassen solche mit Ethylenglokol oder Hydroxylgruppen als Seitenketten. Weitere Beispiele umfassen betainische Monomere.

Durch die Verwendung eines hydrophilen Co-Monomers können hydrophile und oleophobe Eigenschaften des Polymers und somit Filters gegeneinander abgestimmt werden. Die oleophoben Eigenschaften des Polymers bzw. Filters sind generell auf die fluorhaltigen Gruppen des fluorhaltigen Monomers zurückzuführen. Je höher in einer der vorliegenden Ausführungsformen der Gehalt an den fluorhaltigen Monomeren ist, desto oleophober aber gleichzeitig auch hydrophober ist das Polymer normalerweise. Je höher in der vorliegenden Ausführungsform der Gehalt des hydrophilen Co-Monomers ist, desto hydrophiler wird die Beschichtung. Wird der Anteil der hydrophilen Co-Monomere aber zu groß, geht der simultane oleophobe Charakter verloren.

In einer Ausführungsform liegt der Anteil der repetitiven Einheiten des Co-Polymers, die auf das fluorhaltige Monomer zurückgehen, zwischen 0,1 und 50 Mol.-%, vorzugsweise zwischen 0,5 und 15 Mol.-% und weiter vorzugsweise zwischen 1 und 10 Mol.-%. In diesen Bereichen wird eine ausreichende, technisch nutzbare Oleophobie erreicht und gleichzeitig wird eine zu hohe Fluorkonzentration vermieden, was aus wirtschaftlichen und umwelttechnischen Gründen wünschenswert ist.

In einer Ausführungsform handelt es sich bei der hydrophilen Gruppe um eine polare oder ionische Gruppe, beispielsweise ein saures Anion. Geeignete Beispiele umfassen Sulfonate oder Phosphonate.

Neben dem fluorierten Monomer und vorzugsweise dem hydrophilen Co-Monomer können dem Co-Polymer auch noch andere Co-Monomere zugrunde liegen, beispielsweise unfunktionalisierte Co-Monomere mit lediglich einer vernetzbaren aber keiner anderweitig funktionalisierten Gruppe, stark oleophobe Monomere mit einer vernetzbaren und fluorhaltigen funktionellen Gruppe, jedoch keiner geladenen funktionellen Gruppe oder quervernetzende Co-Monomere. Quervernetzende Co-Monomere können wenigstens zwei vernetzbare aber keine anderweitig funktionalisierten Gruppen aufweisen. Anstelle einer vernetzbaren Gruppe kann auch eine reaktive Gruppe vorhanden sein, um eine vorzugsweise kovalente Bindung zur Oberfläche des Substrats herstellen zu können

Beispiele potentiell geeigneter zusätzlicher Co-Monomere umfassen ungeladene fluorhaltige Monomere, welche auf fluorhaltige (Meth)Acrylatmonomere bzw. (Meth)Acrylamidmonomere zurückgehen. Diese Co-Monomere können die Oleophobie des Co-Polymers erhöhen. Bevorzugt können auch Polymere, Oligomere und Präpolymere als Co-Bestandteile sein. Diese können auf Vinylidendifluorid, Tetrafluorethylen, Vinylfluorid, Chlortrifluorethylen, Ethlyen-Tetrafluorethylen, Perfluoro(ethylen-propylen) und Perfluoroalkoxy-Verbindungen, sowie Kombinationen dieser als Monomere zurückgehen.

Weitere Beispiele potentiell geeigneter zusätzlicher Co-Monomere umfassen reaktive bzw. latente Monomere, welche auf reaktive bzw. latente (Meth)Acrylatmonomere, (Meth)Acrylamidmonomere, Allyl- bzw. Vinylmonomere zurückgehen. Diese Monomere können die Haftung des Polymers zu verschiedenen Substraten erhöhen. Bevorzugt können dabei Co-Monomere sein, welche eine Isocyanat-Gruppe, eine blockierte Isocyanatgruppe, eine polymerisierbare Trialkoxysilyl-Gruppe, eine polymerisierbare Epoxy-Funktionalität, bzw. mehrere Doppelbindungen umfassen.

Weitere Beispiele potentiell geeigneter zusätztlicher Co-Monomere umfassen hydrophobe Monomere, welche auf hydrophobe (Meth)Acrylatmonomere bzw. (Meth)Acrylamidmonomere zurückgehen. Bevorzugt enthalten diese Monomere eine verzweigte oder unverzweigte Alkylgruppe.

Weitere Beispiele potentiell geeigneter zusätztlicher Co-Monomere umfassen (Meth)acrylsäure und (Meth)acrylsäurederivate, unter anderem Acrylsäure, Methacrylsäure, 3-Sulfopropylacrylat, Hydroxyethyl(meth)acrylat, Lauryl(meth)acrylat, Octadecyl(meth)acrylat, Stearyl(meth)acrylat, Isobornyl(meth)acrylat, (Poly)ethylenglycol(meth)acrylat.

Weitere Beispiele geeigneter zusätzlicher Monomere umfassen (Meth)acrylamid und (Meth)acrylamidderivate, unter anderem 2-Acrylamido-2-Methylpropansulfonsäure (AMPS), 2-Acrylamido-2-Methylpropansulfonat, N,N-Dimethylaminoethylacrylamid (DMAEAA), N,N-Dimethylaminopropylacrylamid (DMAPAA), Trimethylammoniumethyl(meth)acrylatchlorid, N-Hydroxyethylacrylamid (HEAA), Dimethylacrylamid (DMAA), N-Isopropylacrylamid (NIPAM), Diethylacrylamid (DEAA) und N-tert-Butylacrylamid (t-BAA). Zudem können Urethanacrylat, Epoxyacrylat und Derivate des Epoxyacrylats eingesetzt werden.

Beispiele geeigneter quervernetzbarer Co-Monomere umfassen Methylenmethylbis(meth)acrylat, Ethylenbisethyl(meth)acrylat, Bisglycidylmethacrylat, Urethandimethacrylat, Hexandioldimethacrylat, Tetraethylenglycoldimethacrylat, (Poly)ethylenglycoldi(meth)acrylat, Glycerindi(meth)acrylat, Glycerintri(meth)acrylat, 1,9-Nonandioldi(meth)acrylat, Dipentaerythritolhexaacrylat, Dipentaerithritolpenta-/hexaacrylat und Trimethylolpropanethoxylattriacrylat.

Weitere Beispiele potentiell geeigneter zusätztlicher Co-Monomere umfassen ungeladene Fluoro(meth)acrylate. Beispiele umfassen 1*H*,1*H*,2*H*,2*H-*Perfluorooctyl(meth)acrylat, Pentafluoropropyl(meth)acrylat und allgemein verzweigte und unverzweigte 1*H*,1*H*,2*H*,2*H*-Perfluoroalkylmethacrylate sowie 1-(1*H*,1*H*,2*H*,2*H*-Perfluorooctyl)-3-vinyl-1,3-dihydro-2H-imidazole-2-thion.

Weitere Beispiele potentiell geeigneter zusätzlicher Co-Monomere umfassen ungeladene reaktive Monomere. Beispiele umfassen Glycidyl(meth)acrylat, Trimethylvinylsilan, Trimethoxyvinylsilan, Triethoxyvinylsilan, Triacetoxy(vinyl)silan, Tris(trimethylsiloxy)(vinyl)silan, 3-(Trimethoxysilyl)propylmethacrylat, 3-(Trimethoxysilyl)propylacrylat, 3-Isopropenyl-α,α-dimethylbenzylisocyanat, 2-Isocyanatoethyl(meth)acrylat, 2-[3,5-dimethylpyrazol)carboxyamino]ethyl(meth)-acrylat, 1,1-(bisacryloyloxymethyl)ethylisocyanat, und 2-Methyl-2-(2-isocyanatoethoxy)ethylester. In einer Ausführungsform sind die oben genannten Isocyanate vor Reaktion mit einem Blockierungsmittel geschützt. Durch Hitze oder Katalystoren können die Blockierungsmittel wieder entfernt werden. Dadurch können in der Herstellung die Haltbarkeit, die Haftung und die Waschstabilität deutlich verbessert werden. Beispiele von bevorzugten Blockierungsmitteln umfassen 2-Butanonoxim, 3,5-Dimethylpyrazol, ε-Caprolactam, Di-tert-butylamin und tert-Butylbenzamin.

In einer Ausführungsform ist vorgesehen, dass zumindest ein Teil der zusätzlichen Monomere eine Ladung aufweist und bevorzugt Salze der 2-Acrylamido-2-methylpropansulfonsäure, Salze der Sulfopropyl(meth)acrylsäure, Salze der (Meth)acrylsäure, Salze von [2-(Methacryloyloxy)ethyl] trimethylammoniumverbindungen wie beispielsweise [2-(Methacryloyloxy)ethyl]-trimethyl-ammoniumchlorid, (Vinylbenzyl)benzyltrimethylammoniumverbindungen, [3-(Meth-acrylamino)propyl]dimethyl(3-sulfopropyl)ammoniumhydroxid Betain, Diallyldi-methylammoniumverbindungen, Salze der Maleinsäure, Maleinsäureester und Kombinationen dieser umfasst.

In einer Ausführungsform ist vorgesehen, dass zumindest ein Teil der zusätzlichen Monomere eine zusätzliche Funktionalität besitzt, welche mit einem Substrat in Wechselwirkung treten kann und bevorzugt Vinylsilane, (Meth)acrylsilane, Glycidyl(meth)acrylat, Isocyanacrylate, blockierte Isocyanacrylate, blockiertes und nicht blockiertes 3-Isopropenyl-α,α-dimethylbenzylisocyanat, und Kombinationen dieser umfasst.

In einer Ausführungsform ist vorgesehen, dass zumindest ein Teil der zusätzlichen Monomere eine zusätzliche Funktionalität besitzt, welche neutral ist und bevorzugt Styrol, Urethan(meth)acrylate, Ester(meth)acrylate, Polyethylen(meth)acrylate, lineare und verzweigte Alkyl(meth)acrylate und Fluor(meth)acrylate bzw. Kombinationen dieser umfasst.

Als Alternative oder Ergänzung zu quervernetzenden Co-Monomeren kann auch vorgesehen sein, dass zumindest ein Teil der fluorhaltigen Monomere und/oder der hydrophilen Co-Monomere wenigstens zwei vernetzbare Gruppen aufweist.

Der Anteil der repetitiven Einheiten des Co-Polymers, die auf Monomere oder Co-Monomere mit wenigstens zwei vernetzbaren Gruppen zurückgehen, kann in einer Ausführungsform zwischen 0,1 und 2 Mol.-% liegen.

In einem gewissen Rahmen kann durch einen höheren Grad an Quervernetzung die Beständigkeit des Polymers und, sofern als Beschichtung eingesetzt, dessen Haftung an einem Substrat verbessert werden.

Die Quervernetzung ermöglicht unter Umständen auch die Schaffung von Systemen, die recycelbar sind. Es kann vorgesehen sein, dass die Monomere mit wenigstens zwei vernetzbaren Gruppen zwei unterschiedliche Arten von vernetzbaren Gruppen umfassen, wobei eine dieser Gruppen eine physikalisch oder chemisch spaltbare Bindung beinhaltet, beispielsweise durch Temperatur oder Hydrolyse.

Die vernetzbaren Gruppen der Co-Monomere können ebenso ausgebildet sein wie dies im Zusammenhang mit den vernetzbaren Gruppen der fluorhaltigen Monomere beschrieben wurde.

Bei dem Co-Polymer handelt es sich vorzugsweise um ein Random-Co-Polymer mit zufällig verteilten repetitiven Einheiten.

Der Filter umfasst auch zu den ionischen Gruppen der fluorierten und gegebenenfalls der hydrophilen Monomere korrespondierende Gegenionen, bei denen es sich beispielsweise um Halogenidanionen oder Alkalimetallkationen handeln kann. Beispiele geeigneter anionischer Gegenionen umfassen Chlorid, Bromid, Iodid, Arylsulfonat, Alkylsulfonat, Perfluoralkylsulfonat, Alkylsulfat, Sulfat, Arylphosphonat, Alkylphosphonat, Monoalkylphosphat, Dialkylphosphat, (Di)Hydrogenphosphat, Phosphat, Hexafluorophosphat, Tetrafluoroborat, Hydrogencarbonat, Carbonat, Carbamat, Alkylcarbonat, Trifluoromethansulfonat, Bis(trifluormethylsulfonyl)imid, Nonaflat, Carboxylat, Camphersulfonat, Vinylphosphonat und Kombinationen dieser.

Neben den oleophoben und hydrophilen Eigenschaften zur Trennung wässriger und öliger Phasen liegt ein weiterer Vorteil der erfindungsgemäßen Filter darin, dass die ionischen Gruppen des Polymers die Bildung eines filterblockierenden Biofilms hemmen.

Aufgrund der hydrophilen Eigenschaften ist auch ein Waschen des Filters mit Wasser jederzeit möglich.

In einer Ausführungsform umfassen der Filter bzw. der Polymeranteil oder die Polymerbeschichtung des Filters neben dem oleophoben Polymer zusätzlich Mikro- oder Nanopartikel. Diese können dazu dienen, die Kratzfestigkeit und/oder die hydrophoben und oleophoben Eigenschaften einer aus der Zusammensetzung resultierenden Beschichtung zu verbessern. Leitfähige Partikel können ebenfalls zum Einsatz kommen, beispielsweise um die elektrostatische Aufladung zu verringern oder um Reibungswärme abzuleiten. Beispiele geeigneter Nanopartikel umfassen Silika-Partikel, Titandioxid-Partikel, Aluminiumoxid-Partikel, Zinkoxid-Partikel, Zircondioxid-Partikel, Silber-Partikel, Cellulose-Partikel, Kohlenstoffnanoröhrchen, Graphen, Kohlenstoff-Partikel, Polytetrafluorethylen (PTFE)-Partikel, Polyethylen-Partikel, Polypropylen-Partikel und Kombinationen daraus.

In einer Ausführungsform wird ein erfindungsgemäßer Filter zur Trennung von hydrophilen und oleophoben Komponenten verwendet. Dabei ist das Vorhandensein von Poren essentiell für die Trennleistung. Die Porengröße liegt bevorzugt bei 0,001 µm bis 1000 µm, bevorzugt bei 0,005 µm bis 500 µm und besonders bevorzugt bei 0,01 bis 250 µm. Die Poren eines erfindungsgemäßen Filters können kontinuierlich oder diskontinuierlich verteilt sein.

Ein erfindungsgemäßer Filter zeichnet sich in einer Ausführungsform dadurch aus, dass Kontaktwinkel für Wasser kleiner 70°, bevorzugt unter 40° und besonders bevorzugt unter 10° liegen. Bevorzugt kann das Wasser durch die poröse Struktur des Filters dringen. Der Kontaktwinkel für Hexadecan oder Diiodmethan kann über 50°, bevorzugt über 70° und besonders bevorzugt über 90° liegen. Bevorzugt gelangen hydrophobe Komponenten nicht durch die poröse Struktur.

Vor dem eingangs genannten Hintergrund betrifft die Erfindung ferner ein Verfahren zur Herstellung eines erfindungsgemäßen Filters mit dem Schritt der Bereitstellung einer Lösung des fluorhaltigen Monomers und gegebenenfalls der weiteren Co-Monomere, mit dem Schritt der Auftragung dieser Lösung auf ein Substrat, sowie mit dem Schritt der Vernetzung der Monomere zur Bildung des Polymers.

Als Substrat können beispielsweise der fertige Filter (beispielsweise ein fertiges Fließ, eine fertige PTFE-Membran oder ein fertiges Textil) dienen. Ebenso ist denkbar, dass als Substrat Ausgangsmaterialien zur Fertigung des Filters (beispielsweise die Fasern zur Herstellung des Vlieses) oder Textils (der Textilfasern oder Garne) dienen.

Geeignete Verfahren zur Vernetzung umfassen thermische Verfahren, Bestrahlung, chemische Härtung oder Kombinationen daraus. Zu diesem Zweck werden der Lösung gegebenenfalls UV-Initiatoren, thermische Radikalstarter und/oder chemische Radikalstarter wie Peroxodisulfat-Salze zugegeben. Es sind auch kotrollierte freie Radikalreaktionen und reversible deaktivierende Radikalpolymerisationen möglich. Darunter fallen Atom-Transfer-Radical Polymerisation (ATPR), Reversible-Deaktivationspolymerisation, Nitroxidemediated polymerization (NMP), Reversible addition-fragmentation chain transfer (RAFT) oder Iod-Transfer Polymerisation (ITP).

Zusätzlich sind auch direkte strahlenhärtende Verfahren, wie zum Beispiel e-Beam Härtung und Polymerisationen mittels Gammastrahlung denkbar.

Durch die ionischen Fluormonomere ist man bei der Herstellung von Membranen zur Trennung von Öl und Wasser in technischer Hinsicht besonders flexibel.

In einer Anwendung werden die ionischen Fluormonomere mit möglichen Co-Monomeren in gelöster Form, in Lösungsmitteln, gasförmig, als ionische Flüssigkeiten bzw. als Eutektikum auf eine poröse Oberfläche gebracht und dort direkt gehärtet.

In einer Ausführungsform werden durch Porogene Poren in einem erfindungsgemäßes Polymer bzw. Co-Polymer erzeugt, welche dazu führen, dass die Polymer bzw. Co-Polymer-Matrix direkt als Membran verwendet werden kann und kein Substrat benötigt wird.

In einer Anwendung werden die ionischen Fluormonomere mit möglichen Co-Monomeren bzw. Co-Polymeren in einer Flüssigkeit, bevorzugt Wasser, polymerisiert. Dadurch wird eine Polymerdispersion bzw. Co-Polymerdispersion erhalten. Die so erhaltenen Polymerpartikel in der Dispersion weisen eine Partikelgrößenverteilung von 30 nm bis 500 µm, bevorzugt zwischen 50 nm und 50µm und besonders bevorzugt zwischen 90 nm und 500 nm auf.

In einer Ausführungsform kann ein erfindungsgemäßes beschriebenes Polymer bzw. Co-Polymer als Feststoff erhalten werden. Dieser Feststoff kann anschließend wieder gelöst und dadurch eine Membran erhalten werden. Das Lösungsmittel kann hier als Porogen dienen bzw. können zusätzliche Porogene verwendet werden. Die bevorzugte Viskosität der Polymerlösungen bzw. Co-Polymerlösungen liegt für diese Applikationen zwischen 50 mPas und 10.000 mPas, bevorzugt zwischen 100 mPas und 5.000 mPas und besonders bevorzugt zwischen 200 mPas und 1.000 mPas bei 20°C.

Der Lösungsmittelanteil der Lösung kann in dem erfindungsgemäßen Verfahren generell zwischen 0 und 99 Gew.-%, bevorzugt zwischen 50 und 99 Gew.-% und besonders bevorzugt zwischen 70 und 99 Gew.-% betragen. Der Monomeranteil der Lösung kann beispielsweise zwischen 0,5 und 99 Gew.-%, vorzugsweise 5 bis 70 Gew.-%, besonders bevorzugt 10 bis 40 Gew.-% betragen.

Des Weiteren betrifft die Erfindung ein Verfahren zur Herstellung eines erfindungsgemäßen Filters, welches einen Schritt der Bereitstellung einer Lösung des oleophoben Polymers und ggf. weiterer polymerer oder monomerer Bestandteile, einen Schritt der Auftragung dieser Lösung auf ein Substrat und den Schritt eines chemischen oder physikalischen Härtens der Polymerlösung, vorzugsweise einer Entfernung des Lösungsmittels umfasst. Die Auftragung der Lösung kann im Rahmen dieses Verfahrens beispielsweise durch Spray-Applikation oder ein Tauchverfahren erfolgen.

Ein chemisches Härten der Lösung des bereits vernetzten Polymers kann beispielsweise durch eine zusätzliche Quervernetzung der Polymerketten erfolgen. Zu diesem Zweck sind die oben mit dem alternativen Verfahren beschriebenen Vorgehensweisen und Additive denkbar.

Ein physikalisches Härten kann beispielsweise durch einfache Trocknung stattfinden.

Auch in diesem erfindungsgemäßen Verfahren kann der Lösungsmittelanteil der Lösung generell beispielsweise zwischen 0 und 99 Gew.-%, bevorzugt zwischen 50 und 99 Gew.-% und besonders bevorzugt zwischen 70 und 99 Gew.-% betragen. Der Polymeranteil der Lösung kann beispielsweise zwischen 0,5 und 99 Gew.-%, vorzugsweise 5 bis 70 Gew.-% und weiter vorzugsweise 10 bis 40 Gew.-% betragen.

Für eine Spray-Applikation oder ein Tauchverfahren wird eine Viskosität von 1 mPas bis 1.000 mPas, insbesondere 2 mPas bis 500 mPas und ferner insbesondere 3 mPas bis 200 mPas bei 20°C bevorzugt.

Die Erfindung umfasst also Sprühverfahren ebenso wie eine direkte Beschichtung durch direkte Polymerisation auf den verschiedensten Substraten.

Des Weiteren betrifft die Erfindung ein Verfahren zur Herstellung eines erfindungsgemäßen Filters, das den Schritt der Bereitstellung einer Lösung des oleophoben Polymers und ggf. weiterer polymerer oder monomerer Bestandteile, sowie den Schritt der Präzipitation oder Phasenextrusion mit einem Antisolvent umfasst. So kann aus einer Polymerlösung bzw. Co-Polymerlösung durch ein Antisolvent eine Faser oder Membran direkt hergestellt werden. Die Polymerlösung hat dabei bevorzugt eine Viskosität von 200 mPas bis 50.000 mPas, bevorzugt von 500 mPas bis 30.000 mPas und besonders bevorzugt von 1.000 mPas bis 10.000 mPas bei 20°C.

In einer Ausführungsform kann es sich bei dem Lösungsmittel beider erfindungsgemäßer Verfahren um Wasser oder ein Gemisch mit wenigstens 30 Vol.-% und vorzugsweise wenigstens 50 Vol.-% Wasser handeln. Generell können polare Lösungsmittel wie Wasser, Ethanol oder DMF geeignet sein, wobei aus ökologischen und wirtschaftlichen Gesichtspunkten Wasser oder eine Lösungsmittel mit möglichst hohem Wasseranteil zu bevorzugen ist. Die im Rahmen der vorliegenden Erfindung verwendeten Monomere sind unter Umständen allesamt in ausreichenden Konzentrationen in reinem Wasser löslich.

Es kann also festgehalten werden, dass die Erfindung in einer Ausführungsform die Co-Polymerisation des fluorhaltigen Monomers mit wenigstens einem hydrophilen Co-Monomer auf einem durchlässigen Substrat umfasst.

Generell umfassen bevorzugte Methoden der Membranherstellung eine thermisch induzierte Phasenseparation, eine nicht lösungsmittelinduzierte Phasenseparation, verdampfungsinduzierte Phasenseparation, dampfphaseninduzierte Phasenseparation, das Beschichten einer bestehenden porösen Struktur, durch Polymerisation und Kombinationen dieser Methoden.

Die Erfindung betrifft schließlich ein Verfahren zur Trennung hydrophiler und hydrophober Fluide unter Verwendung eines erfindungsgemäßen Filters. Erfindungsgemäße Filter können generell zur Trennung von wässrigen und öligen Phasen verwendet werden. Beispielhafte Anwendungen umfassen die Wasseraufbereitung bis hin zur Sammlung von ausgetretenem Öl nach Ölkatastrophen. Auch eine Entfernung von fluorhaltigen Tensiden aus Abwasserströmen kann mit erfindungsgemäßen Filtern erreicht werden.

Zusammenfassend lässt sich festhalten, dass sich durch die Verwendung geladener (ionischer) Fluormonomere und daraus gebildeter Fluorpolymere zahllose Vorteile gegenüber dem Stand der Technik ergeben.

Zum einen ermöglicht die Ladung der Monomere eine deutlich bessere Löslichkeit in polaren Lösungsmitteln. Deshalb ist die Verwendung von lediglich Wasser oder Alkoholen als Lösungsmittel denkbar. Dies minimiert die Emission flüchtiger organischer Verbindungen (VOCs, Volatile Organic Compounds) deutlich und führt zu deutlich umweltfreundlicheren Verfahren. Bei den geladenen Fluormonomeren und Fluorpolymeren selbst handelt es sich um Salze, die einen nicht messbaren Dampfdruck und somit keine intrinsische Flüssigkeit aufweisen.

Ein weiterer Vorteil besteht darin, dass geladene Fluorgruppen ein deutlich besseres Anti-Fouling Verhalten als ungeladene Fluorgruppen aufweisen. Das Bakterienwachstum stellt eines der größten Probleme in der Membrantechnik dar. Dies kann durch die vorliegende Erfindung effizienter bewältigt werden.

Fluortensidmoleküle ordnen sich in hydrophile und fluorophile Segmente. Zusätzlich liegen, bedingt durch die ionische Struktur, die Fluorseitenketten in einer für Alkane typischen Zick-Zack-Anordnung und nicht in einer für Fluorseitenketten normalerweise typischen helikalen Anordnung vor. Zusätzlich ordnen sich die Moleküle in hydrophile und oleophobe Segmente. Dies kann zu einer besseren Kristallinität der Fluorseitenketten führen. Vereinfacht ausgedrückt bedeutet dies, dass aufgrund der ionischen Struktur der Fluorgruppen die Oleophobie der Systeme erhöht werden kann. Diese Effekte ermöglichen die Verwendung von kürzeren Fluorketten bei gleichbleibend starken oleophoben Eigenschaften.

Weitere Einzelheiten und Vorteile der Erfindung ergeben sich aus den nachfolgend beschriebenen Figuren und Ausführungsbeispielen. In den Figuren zeigen:
- Figur 1:: eine Gegenüberstellung des Verhaltens unbeschichteter und mit einem oleophoben Polymer beschichteter Substrate gegenüber wässrigen und öligen Phasen; und
- Figur 2:: einen Versuchsaufbau zur Trennung eines Wasser/Öl-Gemischs mit einem erfindungsgemäßen Filter.

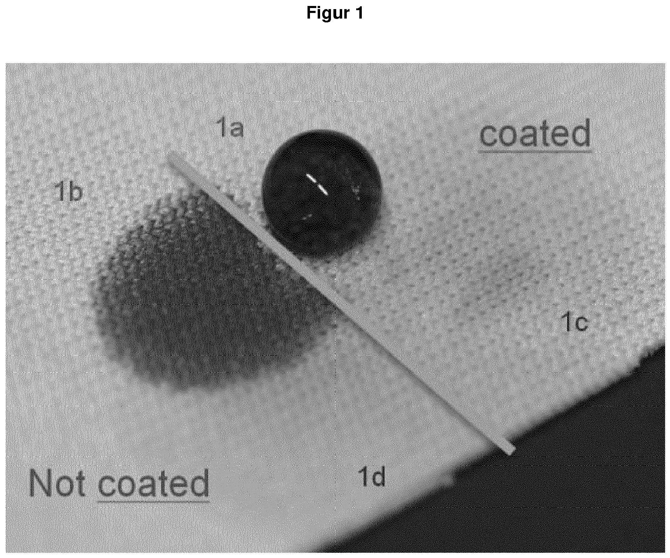

Figur 1 zeigt ein teilweise in erfindungsgemäßer Weise beschichtetes Textil aus Baumwollfasern. Der Strich trennt die beiden Hälften, wobei die linke Hälfte unbeschichtet und die rechte Hälfte beschichtet ist. Die Punkte 1a und 1b zeigen jeweils Sonnenblumenöl, welches rot eingefärbt wurde. Der Unterschied ist deutlich zu erkennen. Im beschichteten Bereich bildet sich ein Öltropfen mit einem Kontaktwinkel deutlich über 90°, während im unbeschichteten Bereich der Tropfen aufgesaugt wird. An Punkten 1c und 1d sind auf beide Seiten gefärbte Wassertropfen aufgebracht, die in beiden Fällen vom Textil aufgesaugt werden. Die verwendete Rezeptur wird im nachfolgenden Beispiel 6 beschrieben.

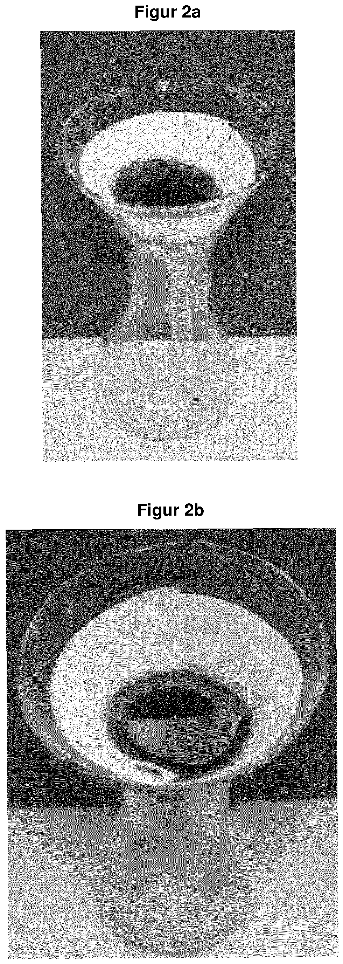

Figur 2 zeigt einen erfindungsgemäß beschichteten handelsüblichen Filter der Firma Macherey-Nagel. Der verwendete Filter hat die Spezifikation MN 616, ein Flächengewicht von 85g/m², eine Dicke von 0,2 mm und ein durchschnittliches Rückhaltevermögen von 4-12 µm. Zunächst wurde der Filter mit einem Rot gefärbten Hexadecan für 1 Minute benetzt. Das Hexadecan blieb dabei im Filter zurück und gelangte nicht durch den Filter, wie dies bei einem nicht beschichteten Filter der Fall ist. Anschließend wurde blau gefärbtes Wasser zugegeben, welches problemlos durch den Filter gelangte. Figur 2a zeigt dabei, wie sich Wasser und Öl nach der Zugabe von Wasser im Filter trennen. Figur 2b zeigt, wie alles Wasser durch den Filter gelangt und das Öl zurück bleibt. Dieses Bild wurde nach 2 Stunden aufgenommen. Die verwendete Rezeptur wird im nachfolgenden Beispiel 1 beschrieben.

### Beispiel 1:

Synthese einer hydrophilen und oleophoben Membran:
Die in der folgenden Tabelle abgebildeten Stoffe wurden in einen Kolben gegeben und für 5 Minuten gerührt. Anschließend wurde ein Filterpapier (MN616, siehe oben) mit dieser Monomermischung mit Hilfe einer Pipette benetzt. Im Zuge von Reproduktionsversuchen wurden zusätzlich auch andere Verfahren wie das Tauchverfahren und das Sprayverfahren erfolgreich angewendet.

| **Menge [mg]** | **Substanz** |
|---|---|
| 10 | 2,2-Dimethoxy-2-phenylacetophenon |
| 100 | 3-(1*H*,1*H*,2*H*,2*H*-perfluorooctyl)-1-vinylimidazoliumiodid |
| 100 | 3,3'-(hexan-1,6-diyl)bis(1-vinylimidazolium)dibromid |
| 125 | Acetonitril |
| 125 | Propan-1-ol |
| 75 | Wasser |

Das so imprägnierte Papier wurde dann mithilfe einer UV-LED Lampe bei einer Wellenlänge von ca. 365nm für 3 Minuten bestrahlt. Der erhaltene Filter war nun an den beschichteten Stellen leicht vergilbt (Iod/Triiodid). Um die Eigenschaften der erhaltenen Beschichtung genauer zu untersuchen, wurden die Kontaktwinkel von Wasser und Hexadecan gemessen. Wasser stellt dabei die hydrophile Komponente dar und Hexan repräsentiert die hydrophobe Komponente. Jeder Wert wurde 3-mal gemessen und der Mittelwert notiert.

**Ergebnisse:**

| **Verwendeter Tropfen** | **Kontaktwinkel nach 5 Sekunden** |
|---|---|
| Wasser [∼4µl] | völlig versunken |
| Hexadecan [∼7µl] | 123° (±2,5) |

Der Hexadecantropfen blieb für 2 Minuten unverändert als Tropfen auf dem Filterpapier liegen.

Zusätzlich wurde eine Trennung von Öl und Wasser mit dem Filter vorgenommen. Die Ergebnisse sind in Figur 2 dargestellt.

### Beispiel 2

Die in Beispiel 1 beschriebene Rezeptur wurde auch auf ein kommerziell erhältliches Papiertuch der Firma Tork aufgebracht. Dieses wurde ebenfalls mit einer UV-LED Lampe für 3 Minuten bestrahlt. Die erhaltene Beschichtung war ebenfalls gelb. Im Fall dieses Substrates wurde der Kontaktwinkel zusätzlich noch mit Diiodmethan gemessen.

| **Verwendeter Tropfen** | **Kontaktwinkel nach 5 Sekunden** |
|---|---|
| Wasser [4µl] | völlig versunken |
| n-Hexadecan [∼6µl] | 115° (±4,5) |
| Diiodmethan [1,5 µl] | 124° (±1,5) |

### Beispiel 3

Dieses Beispiel ist Beispiel 1 sehr ähnlich, allerdings wurde in diesem Fall das noch hydrophilere Chloridsalz des fluorierten Kations verwendet. Es wurde das gleiche Filtermaterial und die gleichen Prozessparameter wie in Beispiel 1 verwendet.

| **Menge [mg]** | **Substanz** |
|---|---|
| 10 | 2,2-Dimethoxy-2-phenylacetophenon |
| 100 | 3-(1*H*,1*H*,2*H*,2*H*-perfluorooctyl)-1-vinylimidazoliumchlorid |
| 100 | 3,3'-(hexan-1,6-diyl)bis(1-vinylimidazolium)dibromid |
| 125 | Acetonitril |
| 125 | Propan-1-ol |
| 75 | Wasser |

Obwohl das Chloridsalz des Fluortensids die deutlich höhere Wasserlöslichkeit besitzt, wurde der Wassertropfen auf dem Substrat deutlich langsamer aufgesogen. War der Wassertropfen in Beispiel 1 noch unter 5 Sekunden versunken, wurde dies nun erst nach ca. 15 Sekunden beobachtet. Der direkt am Anfang gemessene Kontaktwinkel von Wasser betrug 115° (±4,5).

| **Verwendeter Tropfen** | **Kontaktwinkel nach 15 Sekunden** |
|---|---|
| Wasser [∼4µl] | vollständig versunken |
| n-Hexadecan [∼7µ] | 115° (±3) |
| Diiodmethan [∼1,5µl] | 126° (±1,5) |

### Beispiel 4

Dieselbe Rezeptur wie in Beispiel 3 wurde verwendet, um eine Cellulosefaser zu beschichten. Aufgrund der vielen Fasern, welche eine sehr inhomogene Oberfläche bildeten, war eine Kontaktwinkelmessung nicht exakt möglich, da die Werte zu stark schwankten. Es konnte aber beobachtet werden, dass Wasser nach wenigen Sekunden aufgesaugt wurde, während sowohl Hexadecan als auch Diiodmethan auf dem Cellulosegewebe für mindestens 2 Minuten verblieben sind.

Folgende Tabelle zeigt die Herstellung von erfindungsgemäßen Beispielen zur UV-Härtung von oleophoben und hydrophilen Beschichtungen:

| | **Menge in mg** | | | | | |
|---|---|---|---|---|---|---|
| **Beispiel** | **5** | **6** | **7** | **8** | **9** | **10** |
| 2,2-Di methoxy-2-phenylacetophenon | 20 | 20 | 20 | 30 | 20 | 20 |
| 3-(1*H*,1*H*,2*H*,2*H*-perfluorooctyl)-2-((1*H*,1*H*,2*H*,2*H*-perfluorooctyl)thio)-1-vinylimidazoliumchlorid | 200 | 200 | 100 | 100 | 100 | 100 |
| Ethylenglycoldimethacrylat | 500 | | | | | 100 |
| Methanol | 500 | 500 | 300 | 300 | 300 | 300 |
| 3,3'-(hexan-1,6-diyl)bis(2-((1*H*,1*H*,2*H*,2*H-*perfluorooctyl)thio)-1-vinylimidazolium)dichlorid | | 500 | | | | |
| Trimethylpropantriacrylat | | | 100 | | | |
| Polyethylenimin | | | | 100 | | |
| Tetraethylenglycoldimethacrylat | | | | | 100 | |
| Butyl methacrylat | | | | | | 100 |

Mit der Rezeptur aus Beispiel 5 wurden ein Baumwolltextil und ein Edelstahlgitter beschichtet und jeweils für 30 Minuten mit einer UV-Lampe gehärtet. Figur 1 zeigt ein teilweise beschichtetes Baumwolltextil mit der verwendeten Rezeptur.
Mit der Rezeptur aus Beispiel 6 wurde ein Baumwolltextil beschichtet. Anschließend wurde das Textil für 30 Minuten mit einer UV-Lampe gehärtet. Das erhaltene Textil verfügte über hydrophile und oleophobe Eigenschaften.

Die in Beispiel 7 hergestellte Rezeptur wurde 30 Minuten mit einer UV Lampe gehärtet und zeigte ein besonderes Verhalten. Auf einem Baumwolltextil verhielt sich die Rezeptur als hydrophile und oleophobe Beschichtung, auf einem Glasträger hingegen zeigte diese Rezeptur in bemerkenswerter Weise hydrophobe und oleophobe Eigenschaften. Das zeigt, dass die Trenneffekte an die jeweilige Oberflächenbeschaffenheit und Textur adaptiert werden können.

Beispiel 8 wurde ebenfalls mit einer UV Lampe für 30 Minuten gehärtet und anschließend auf einem Textil aufgetragen. Dieses zeigte ebenfalls hydrophile und oleophobe Eigenschaften.

Beispiel 9 wurde als Textilbeschichtung aufgetragen, Beispiel 10 wurde sowohl auf ein Textil als auch auf einen Glasträger als Monolith für 30 Minuten mit UV gehärtet. Diese Rezepturen zeigten sowohl auf Glas als auch auf dem Textil hydrophile und oleophobe Eigenschaften.

**Beispiele 10 und 11**

| | **Menge in mg** | |
|---|---|---|
| **Beispielnummer** | **10** | **11** |
| Azobisisobutyronitril (AIBN) | 20 | 20 |
| 3-(1*H*,1*H*,2*H*,2*H*-perfluorooctyl)-2-((1*H,*1*H*,2*H*,2*H-*perfluorooctyl)thio)-1-vinylimidazoliumchlorid | 300 | 300 |
| Ethylenglycoldimethacrylat | 500 | 500 |
| Methanol | 500 | 500 |
| Titandioxid-Nanopartikel | | 100 |

Ein handelsüblicher Polyurethanschaum mit einer Porengrößenverteilung zwischen 1 µm und 500 µm wurde mit den beiden Rezepturen benetzt und anschließend in einem Glasgefäß für 4h bei 65°C gehärtet. Die so erhaltene, nach wie vor sehr flexible Membran, war hydrophil und oleophob und eignete sich zur Trennung von Wasser und Olivenöl. Danach wurde der Schaumstoff öfters mit Wasser und Aceton gewaschen. Anschließend wurden nochmals erfolgreich Wasser und Öl mit Hilfe der Membran getrennt.

**Beispiel 12,13 und 14**

| | **Menge in mg** | | |
|---|---|---|---|
| **Beispiel** | **12** | **13** | **14** |
| Wasser | 100 | 100 | 100 |
| 3-(1*H*,1*H*,2*H*,2*H*-perfluorooctyl)-1-vinylimidazoliumchlorid | 4 | 4 | 4 |
| 2-Acrylamido-2-methylpropansulfonsäure Natriumsalz 50% in Wasser | 4 | | 4 |
| 2,2'-Azobis(2-methylpropinamidin)dihydrochlorid | 0,15 | 0,15 | 0,15 |
| Natriumacrylat | | 1,5 | |
| 2-[(3,5-dimethylpyrazolyl)carboxyamino]ethylmethacrylat | | | 0,2 |

Bei den Rezepturen 12, 13 und 14 wurden zunächst Wasser und die Monomere vorgelegt. Anschießend wurde bei 75°C die Lösung für 15 Minuten kräftig gerührt und der Azo-Radikalstarter zugegeben. Danach wurde bei voller Rührgeschwindigkeit für 1 h die Lösung auf 75 °C gehalten. Mit Hilfe einer Zentrifuge wurde der erhaltene absetzbare Feststoff entfernt und das Textil mit dem Überstand benetzt. Anschließend wurde das Textil bei 80°C für 3 Minuten getrocknet und anschließend bei 150°C für 2 Minuten fixiert. Die erhaltenen Textilien waren wasserdurchlässig und ölabweisend.

**Beispiel 15 Herstellung von Polymerlösungen**

| | **Menge in mg** | |
|---|---|---|
| **Beispielnummer** | **15** | **16** |
| Wasser | 100 | 100 |
| 3-(1*H*,1*H*,2*H*,2*H*-perfluorooctyl)-1-vinylimidazoliumchlorid | 6 | 4 |
| 2,2'-Azobis(2-methylpropinamidin)dihydrochlorid | 0,15 | 0,15 |
| Butylacrylat | | 4 |

Bei den Rezepturen 15 und 16 wurden zunächst Wasser und die Monomere vorgelegt. Anschließend wurde bei 75°C die Lösung für 15 Minuten kräftig gerührt und der Azo-Radikalstarter zugegeben. Danach wurde bei voller Rührgeschwindigkeit für 1 h die Lösung bei 75°C gehalten. Anschließend wurde die Rührgeschwindigkeit vorsichtig verringert und 2h lang bei sehr niedriger Rührgeschwindigkeit weitergerührt. Dabei wurde in beiden Versuchen ein weißer Feststoff erhalten. Dieser Feststoff zeigte eine Molmassenverteilung von 60.000 Da bis 450.000 Da.

Das getrocknete Homopolymer aus Beispiel 15 konnte zu über 220g/l in Novec HFE 7100 IPA (3M) gelöst werden. Die erhaltene Viskosität konnte zwischen 50mPas und über 5.000 mPas bei 20°C eingestellt werden. In diesem Viskositätsbereich können sowohl Filme als auch direkte Membranen bzw. Fasern hergestellt werden.

Das Co-Polymer aus Beispiel 16 war durch den erhöhten Anteil an Butylacrylat nun auch teilweise in organischen Lösungsmitteln löslich. In DMAC und DMF war das Polymer über 20 g/l löslich. Diese Löslichkeit erlaubt somit den Einbau in bestehende Polymermembranen wie zum Beispiel Polysulfone, Poly(vinylidendifluorid) oder Polyacrylonitril. Durch die Wahl der Co-Polymere und Co-Membranpolymere kann nun eine hydrophile und oleophobe Membran zum Beispiel als Flachmembran oder Hohlfasermembran hergestellt werden.

## Patentansprüche

1. Filter zur Trennung hydrophiler von hydrophoben Fluiden, wobei der Filter ein oleophobes Polymer umfasst, daraus besteht oder damit beschichtet ist, und wobei der Filter hydrophile und oleophobe Eigenschaften zeigt,
**dadurch gegenzeichnet,**
dass wenigstens ein Teil der repetitiven Einheiten des oleophoben Polymers auf ein fluorhaltiges Monomer zurückgeht, bei dem es sich um ein ionisches organisches Molekül handelt, das eine ionische Gruppe, eine vernetzbare Gruppe und eine fluorhaltige Gruppe aufweist.

2. Filter nach Anspruch 1, **dadurch gekennzeichnet, dass** es sich bei dem Filter um eine poröse Filterschicht und vorzugsweise Filtermembran handelt, wobei die Porengröße der Filterschicht vorzugsweise zwischen 1 nm und 1 mm und weiter vorzugsweise zwischen 10 nm und 0,5 mm liegt.

3. Filter nach Anspruch 2, **dadurch gekennzeichnet, dass** es sich bei der Filterschicht um ein beschichtetes Substrat handelt, wobei das Substrat vorzugsweise aus Polytetrafluorethylen, expandiertem Polytetrafluorethylen, Polysulfon, Polyethersulfon, Polyethylen, Polypropylen, Polyester, Polyurethane, Polyvinylidendifluorid, Polyamid, Polystyren, Polyacrylonitil, cellulosebasierenden Materialien, einem Metallnetz oder Kombinationen daraus besteht.

4. Filter nach einem der vorhergehenden Ansprüche, **dadurch gekennzeichnet, dass** es sich bei der fluorhaltigen Gruppe um eine perfluorierte Kohlenstoffgruppe handelt.

5. Filter nach einem der vorhergehenden Ansprüche, **dadurch gekennzeichnet, dass** die vernetzbare Gruppe eine reaktive Doppelbindung umfasst.

6. Filter nach einem der vorhergehenden Ansprüche, **dadurch gekennzeichnet, dass** es sich bei der ionischen Gruppe um eine ionisch geladene heterozyklische und insbesondere heteroaromatische Gruppe handelt und/oder dass die Ladung über mehrere Atome der ionischen Gruppe delokalisiert ist.

7. Filter nach einem der vorhergehenden Ansprüche, **dadurch gekennzeichnet, dass** die ionische Gruppe oder das fluorhaltige Monomer insgesamt positiv geladen sind.

8. Filter nach einem der vorhergehenden Ansprüche, **dadurch gekennzeichnet, dass** zwischen der ionischen und der fluorhaltigen Gruppe und/oder zwischen der ionischen und der vernetzbaren Gruppe ein Spacer angeordnet ist.

9. Filter nach einem der vorhergehenden Ansprüche, **dadurch gekennzeichnet, dass** es sich bei dem oleophoben Polymer um ein Co-Polymer handelt und wenigstens ein weiterer Teil der repetitiven Einheiten auf ein hydrophiles Co-Monomer zurückgeht, das eine polymerisierbare Gruppe und eine hydrophile Gruppe aufweist.

10. Filter nach Anspruch 9, **dadurch gekennzeichnet, dass** der Anteil der repetitiven Einheiten des Co-Polymers, die auf das fluorhaltige Monomer zurückgehen, zwischen 0,1 und 50 Mol.-%, vorzugsweise zwischen 0,5 und 15 Mol.-% und weiter vorzugsweise zwischen 1 und 5 Mol.-% liegt.

11. Filter nach Anspruche 9 oder 10, **dadurch gekennzeichnet, dass** ein wiederum weiterer Teil der repetitiven Einheiten des Co-Polymers auf ein quervernetzendes Co-Monomer zurückgeht, das wenigstens zwei vernetzbare Gruppen oder wenigstens eine vernetzbare und eine reaktive Gruppe aufweist.

12. Verfahren zur Herstellung eines Filters nach einem der vorhergehenden Ansprüche,
**dadurch gekennzeichnet,**
**dass** es die folgenden Schritte umfasst:
Bereitstellung einer Lösung des fluorhaltigen Monomers und gegebenenfalls der weiteren Co-Monomere;
Auftragung dieser Lösung auf ein Substrat; und
Vernetzen der Monomere zur Bildung des Polymers.

13. Verfahren zur Herstellung eines Filters nach einem der Ansprüche 1 bis 11,
**dadurch gekennzeichnet,**
**dass** es die folgenden Schritte umfasst:
Bereitstellung einer Lösung des oleophoben Polymers und ggf. weiterer polymerer oder monomerer Bestandteile;
Auftragung dieser Lösung auf ein Substrat; und
Entfernen des Lösungsmittels.

14. Verfahren zur Herstellung eines Filters nach einem der Ansprüche 1 bis 11,
**dadurch gekennzeichnet,**
**dass** es die folgenden Schritte umfasst:
Bereitstellung einer Lösung des oleophoben Polymers und ggf. weiterer polymerer oder monomerer Bestandteile;
Präzipitation oder Phasenextrusion mit einem Antisolvent.

15. Verfahren zur Trennung hydrophiler und hydrophober Fluide unter Verwendung eines Filters nach einem der Ansprüche 1 bis 11.
